# EUROPÄISCHE PATENTSCHRIFT

(11) **EP 0 286 994 B1**
(45) Veröffentlichungstag und Bekanntmachung des Hinweises auf die Patenterteilung: **20.07.1994**
(21) Anmeldenummer: 88105660.0
(22) Anmeldetag: 08.04.1988
(51) Int. Cl.: G01N 21/88, H04N 7/18

(54) **Verfahren und Vorrichtung zur Erkennung von Oberflächenfehlern**
Method and arrangement for the detection of surface flaws
Procédé et dispositif de détection de défauts de surface

(30) Priorität: 13.04.1987 DE 3712513
(43) Veröffentlichungstag der Anmeldung: 19.10.1988
(73) Patentinhaber: DAIMLER-BENZ AKTIENGESELLSCHAFT, 70327 Stuttgart (DE)
(72) Erfinder: Klenk, Jürgen, Dipl.-Ing., D-8031 Alling (DE); Krasowski, Horst, Dr. Dipl.-Phys., D-7000 Stuttgart 80 (DE); Jünemann, Gerhard, Dr. Dipl.-Phys., D-7250 Leonberg 7 (DE)

(56) Entgegenhaltungen:
- EP-A- 0 063 828
- DE-A- 3 418 317
- GB-A- 2 085 255
- US-A- 3 577 039
- US-A- 4 543 602
- JOURNAL OF THE INSTITUTION OF ELECTRICAL ENGINEERS, vol. 9, Juli 1963, Seiten 296-299; G. SYKE et al.: "Closed-circuit television for the inspection of fast-moving surfaces"

## Beschreibung

Die Erfindung betrifft ein Verfahren und eine Vorrichtung zur Überprüfung der glänzenden Oberflächen eines Prüflings auf Oberflächenfehler nach dem Oberbegriff von Anspruch 1 (Verfahren) bzw. von Anspruch 6 (Vorrichtung).

Derartige Verfahren und Vorrichtungen sind beispielsweise aus der DE-PS 34 18 317 bekannt. Sie sind mit dem Nachteil verbunden, daß bestimmte und insbesondere kleinere Oberflächenfehler wegen geringer Kontraste bei der Auswertung des durch Oberflächenfehler beeinflußten reflektierten Lichts nur schwer erkennbar sind. Dies ist beispielsweise dann der Fall, wenn der Glanzgrad der zu prüfenden Oberfläche nicht optimal ist.

Gemäß der vorerwähnten DE-PS 34 18 317 wurde bereits vorgeschlagen, zur Durchführung des eingangs genannten Verfahrens mehrere nebeneinanderliegende Leuchtreihen vorzusehen. Durch die Erzeugung mehrerer voneinander abgesetzter Lichtstreifen auf der zu untersuchenden Oberfläche sollte bei einer Relativbewegung zwischen dieser Oberfläche und der Beleuchtungsanordnung ein Oberflächenfehler nacheinander mehrere Lichtstreifen durchwandern und durch wiederholtes Aufscheinen in den aufeinanderfolgenden Lichtstreifen visuell leichter erkennbar werden. Dieses Verfahren erfordert jedoch vom Prüfpersonal fortwährend höchste Aufmerksamkeit und ist daher auf Dauer sehr ermüdend, ohne daß eine hinreichende Gewähr für ein weitgehend lückenloses Erfassen auch von schwieriger erkennbaren Fehlern gegeben ist.

Gemäß der US-PS 4,629,319 wurde auch schon vorgeschlagen, bei der flächenhaften Ausleuchtung von Oberflächen zur Fehlererkennung eine Kontrasterhöhung im reflektierten Meßlicht durch Verwendung von sog. Retrofolien zu erzielen, die in den Strahlengang des reflektierten Lichtes eingebracht werden und das auf eine solche Folie auftreffende Licht mit einer gewissen Streucharakteristik zurückwerfen, worauf es nach nochmaliger Reflexion an der zu überprüfenden Oberfläche in eine Videokamera gelangt. Dieses Verfahren erfordert jedoch einen großen Einfallswinkel für das Meßlicht, was den Raumbedarf für die gesamte Prüfanordnung erheblich vergrößert, so daß der praktische Einsatz bei beengten räumlichen Verhältnissen auf dem Prüfstand Schwierigkeiten bereitet. Außerdem führen bei der Prüfung gewölbter Oberflächen Änderungen in der Topografie infolge des großen Einfallswinkels des Meßlichts rasch zu erheblichen Verzerrungen, die einer sicheren Fehlerkennung entgegenstehen.

In der Zeitschrift "Journal of the Institution of Electrical Engineers", Vol. 9, Juli 1963, Seiten 296 bis 299 wird ein optisches Prüfverfahren für rasch bewegte, galvanisch verzinkte Blechbänder beschrieben, bei dem einzelne Standbilder der Blechoberfläche mittels eines rotierenden Polygonspiegels erzeugt und video-optisch ausgewertet werden. Die Fehler an galvanischen Verzinnungen zeigen sich an einem veränderten Glanzgrad der Oberfläche und können als mehr oder weniger starke Intensitätsänderungen gegenüber der einwandfreien Zinnoberfläche festgestellt werden.

Die GB-PS 2,085,255 zeigt eine Einrichtung zum selbsttätigen video-optischen Erkennen von Eisenbahnwaggons während der Vorbeifahrt, wobei mittels eines rotierenden Polygonspiegels der Aufnahmestrahl synchron mit dem Waggon mitbewegt wird und so von dessen Seitenwand eine Serie von sich überlappenden Standbildern erzeugt wird, die hinsichtlich Identifizierungszeichen der Waggons, die auf die Seitenwand des Waggons großflächig aufgemalt sind, ausgewertet werden.

Der Erfindung liegt die Aufgabe zugrunde, ein Verfahren und eine Vorrichtung der eingangs genannten Art zu schaffen, das eine sichere Detektierung von Fehlern an oder in Oberflächen von Kraftfahrzeugen und anderen Gegenständen ermöglicht, und zwar auch dann, wenn die Oberfläche, wie im Fall der Vorlackierung bei Kraftfahrzeug-Karosserien, matt ist und daher eine stärkere Streuung des reflektierten Lichtes bewirkt. Trotzdem soll die Prüfanordnung raumsparend und daher vielseitig einsetzbar sein und die Gestehungskosten überwiegend in den elektronischen Bereich verlegen, in dem im allgemeinen mit deutlicher Kostendegression zu rechnen ist. Darüber hinaus soll eine einfache, das Prüfpersonal weitgehend entlastende Handhabung der Prüfanordnung erzielt werden.

Diese Aufgabe wird erfindungsgemäß bezüglich des Verfahrens durch die kennzeichnenden Merkmale von Anspruch 1 und bezüglich der Vorrichtung durch die kennzeichnenden Merkmale von Anspruch 6 gelöst. Dank der Beobachtung des auf der Prüflingsoberfläche erzeugten Lichtstreifens zeichnen sich Lackfehler darin als dunkle Stellen ab, die mit geringem Aufwand detektiert und lokalisiert werden können.

Zweckmäßige Ausgestaltungen der Erfindung können den jeweiligen abhängigen Ansprüchen entnommen werden.

Ein Ausführungsbeispiel einer bevorzugten Ausführungsform des erfindungsgemäßen Verfahrens und der erfindungsgemäßen Vorrichtung zur Erkennung von Lackfehlern auf der Karosserie von Kraftfahrzeugen ist im folgenden anhand der beigefügten Zeichnungen näher beschrieben. Darin zeigen
- Figur 1: einen Prüfstand zur Oberflächen-Fehlererkennung in der Ansicht und mit Rechnern in schematischer Darstellung,
- Fig. 2: den Prüfstand von Fig. 1 in vergrößerter Darstellung mit Sensoreinheiten in schematischer Darstellung,
- Fig. 3: eine Beleuchtungseinheit und eine Sensoreinheit aus Fig. 2 in detaillierter Darstellung,
- Fig. 4: die Beleuchtungs- und Sensoreinheiten von Fig. 3 in der Ansicht von unten,
- Fig. 5: die Sensorteinheit aus Fig. 3 in vergrößerter Darstellung,
- Fig. 6: die Sensorteinheit von Fig. 5 in der Ansicht von oben,
- Fig. 7: die Wiedergabe eines auf einem Monitor der Sensoreinheit erscheinenden Bildes von der Abtastung der geprüften Oberfläche.

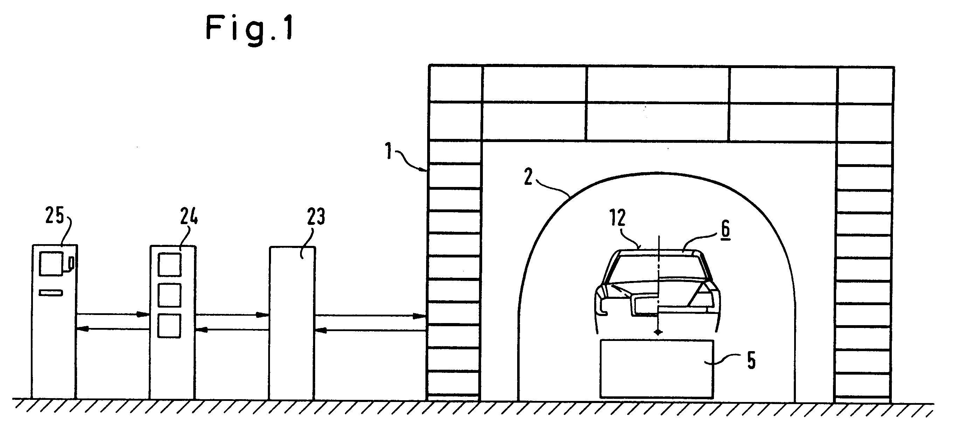

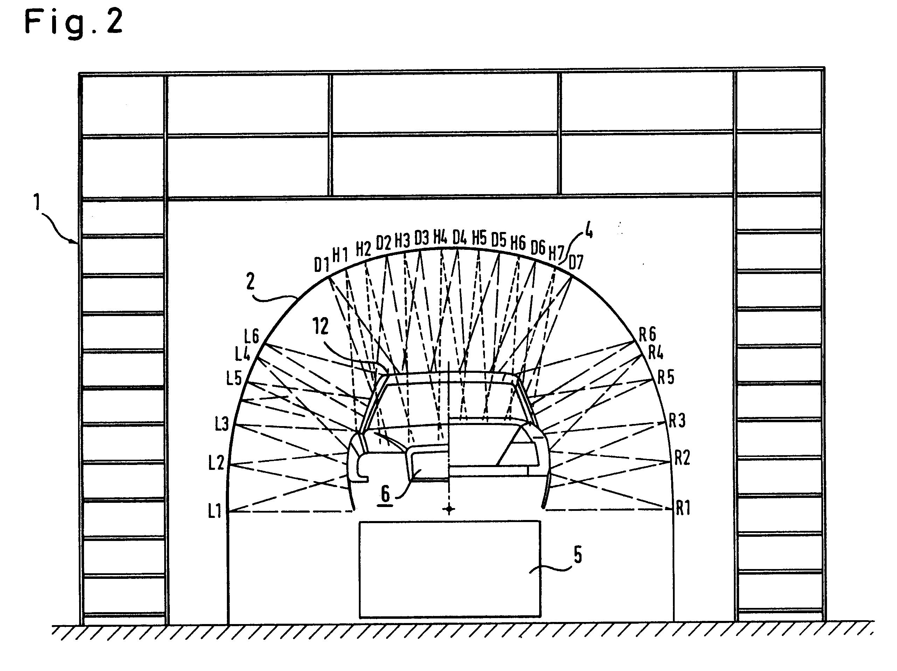

In Fig. 1 und 2 ist ein Prüfstand mit einem Gestell 1 dargestellt, das beispielsweise durch miteinander verschraubte Rohren oder Profilteile gebildet ist. In den Innenraum des Gestells 1 ist als kreisbogenförmige Linie ein Portal 2 eingezeichnet. Längs dieser kreisbogenförmigen Linie sind jeweils mehrere Beleuchtungseinheiten 3 und Sensoreinheiten 4 angeordnet. Diese Einheiten sind am Geräteaufbau 1 mit nicht dargestellten Haltearmen derart befestigt, daß ihre Anordnung längs der kreisbogenförmigen Linie des Portals 2 gewährleistet ist. Die Beleuchtungseinheiten 3 bilden insgesamt ein Beleuchtungssystem, während die Sensoreinheiten 4 insgesamt ein Aufzeichnungssystem bilden, wie dies nachfolgend näher beschrieben wird.

Das Portal 2 ist so dimensioniert, daß auf einem Transportschlitten 5 die Karosserie 6 eines Personenkraftwagens durch das Portal senkrecht zur Zeichenebene von Fig. 1 und 2 hindurchgeführt werden kann und von diesem Portal überspannt wird, wobei die Karosserie mit den Flanken- und Dachpartien einen etwa gleichmäßigen Abstand zu den jeweils gegenüberliegenden Portalsektoren einhält. In Fig. 1 und 2 ist die Karosserie 6 des Kraftwagens in ihrer jeweils linken Hälfte mit der Frontseite und in ihrer jeweils rechten Hälfte mit der Heckseite gezeigt. Sie ist ohne Räder mit nicht dargestellten Lagermitteln auf den Transportschlitten 5 aufgesetzt. Der Schlitten 5 kann mit der auf ihn aufgesetzten Kraftwagen-Karosserie 6 auf nicht dargestellten, senkrecht zur Zeichenebene verlaufenden Schienen langsam und möglichst gleichmäßig durch das Portal 2 hindurchgefahren werden, wozu er mit einem ebenfalls nicht dargestellten Kettenantrieb versehen ist.

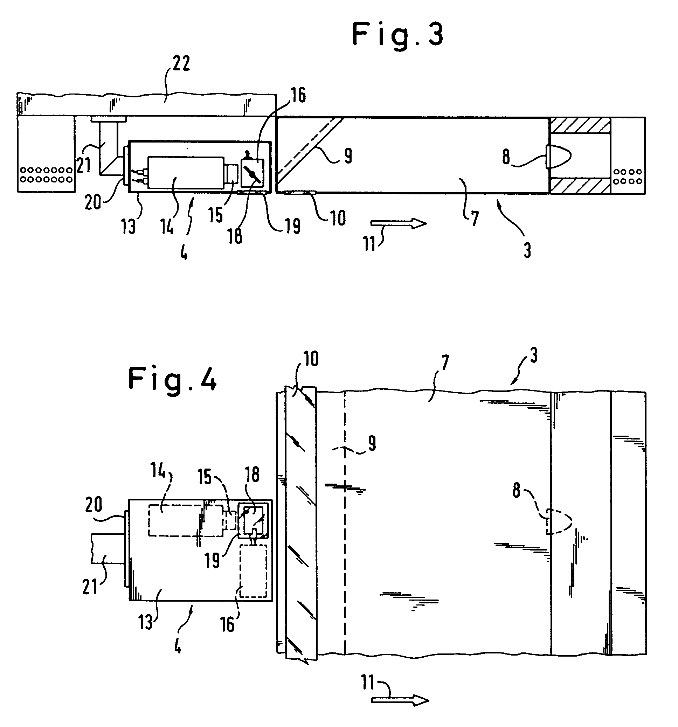

Längs der kreisbogenförmigen Linie des Portals 2 befinden sich ca. 30 unter sich gleich gestaltete Beleuchtungseinheiten 3. Eine dieser Beleuchtungseinheiten ist in Fig. 3 und 4 näher dargestellt.

Die Beleuchtungseinheit 3 weist in einem schachtartigen Gehäuse 7, dessen Flächen mattschwarz lackiert sind, eine Halogenlampe 8 auf, die kaltverspiegelt ist und einen Lichtkegel von ca. ± 20° erzeugt. Das von der Lampe 8 ausgehende Licht fällt auf einen Spezialreflektor 9, der zur optischen Achse der Lampe 8 unter einem Winkel von ca. 45° geneigt ist und das Licht zu einem Austrittsfenster 10 lenkt, das am schachtartigen Gehäuse 7 angeordnet ist und durch welches das Licht auf die Oberfläche der Karosserie 6 des Kraftwagens gelenkt wird. Der Reflektor 9 wirkt für Lichtstrahlenkomponenten parallel zur Zeichenebene von Fig. 3 wie ein Spiegel und für Lichtstrahlenkomponenten senkrecht zur Zeichenebene wie ein Diffusor.

Die Richtung, in welcher die Kraftwagen-Karosserie 6 durch das Portal 2 hindurchbewegt wird, ist in Fig. 3 und 4 durch den Pfeil 11 markiert. Das Lichtaustrittsfenster 10 ist parallel zum Pfeil 11 verhältnismäßig schmal, hat jedoch senkrecht hierzu eine relativ große Ausdehnung.

Die Beleuchtungseinheiten 3 sind am Portal 2 derart angeordnet, daß die Lichtaustrittsfenster 10 benachbarter Beleuchtungseinheiten 3 mit ihren Schmalseiten aneinanderstoßen, so daß längs der Linie des Portals 2 ein durchgehendes schmales Lichtband entsteht, das der Portallinie in einem Polygonzug näherungsweise folgt. Wird die Karosserie 6 auf dem Schlitten 5 durch das Portal 2 hindurchgeführt, so wird das jeweils unter dem Portal 2 befindliche Querschnittsprofil der Karosserie gleichmäßig beleuchtet in Form eines schmalen, durchgehenden Lichtbandes, das sich auf dem zum obigen Querschnittsprofil gehörigen schmalen Abschnitt der Oberfläche 12 der Karosserie 6 senkrecht zur Transportrichung vom unteren Rand der einen Flanke über das Dach bzw. Haubenteil bis zum unteren Rand der anderen Flanke der Karosserie erstreckt. Das auf der Karosserie-Oberfläche 12 erzeugte Lichtband hat eine Breite von ca. 50 bis 100 mm. Beim Hindurchführen durch das Portal wandert die Karosserie 6 unter diesem Lichtband hindurch und wird von ihm jeweils streifenweise beleuchtet.

Ferner befindet sich am Portal 2 dicht neben den Beleuchtungseinheiten 3 eine Anzahl von 26 Sensoreinheiten 4, die zur streifenweisen optischen Abtastung und Aufzeichnung von Bildern der von den Beleuchtungseinheiten 3 beleuchteten Oberflächenabschnitte der Karosserie 6 dienen. Die Sensoreinheiten 4 sind auf dem Portalbogen derart verteilt angeordnet, daß sie mit ihrem Aufnahmewinkel insgesamt alle Teilabschnitte des Querschnittsprofils der Karosserie 6 lückenlos erfassen. Dabei dienen zur Erfassung der linken und rechten Flankenflächen der Karosserie 6 die Sensoreinheiten L1 bis L6 bzw. R1 bis R6, während für die Erfassung der nach oben gerichteten Dach- und Haubenflächen die Sensoreinheiten D1 bis D7 bzw. H1 bis H7 dienen. Die Sensoreinheiten 4 sind unter sich im wesentlichen gleich ausgebildet. Sie unterscheiden sich lediglich hinsichtlich der Fokussierung der in ihnen enthaltenen, weiter unten näher beschriebenen Aufnahmekameras auf unterschiedliche Abstände der von ihnen erfaßten Karosseriebereiche, um zu berücksichtigen, daß die Bereiche der Motor- und Kofferraumhauben der Karosserie vom Portalbogen einen größeren Abstand haben als die Dach- und Seitenbereiche.

Eine der Sensoreinheiten 4 ist ebenfalls in Fig. 3 und 4 näher dargestellt. Sie umfaßt eine Montageplatte 13, auf der eine mit einem Flächen-CCD ausgestattete Videokamera 14 mit einem Aufnahmeobjektiv 15 sowie eine Abtasteinheit (Scanner) 16 mit einem um eine Achse 17 drehbaren Abtastspiegel 18 angeordnet sind. Die in einer Matrix angeordneten CCD-Elemente der Videokamera 13 bilden optoelektronische Wandler zur fernsehgerechten Umwandlung der empfangenen analogen Lichtsignalen in elektrische Digitalsignale. Ferner trägt die Montageplatte 12 ein entspiegeltes Lichteintrittsfenster 19, hinter dem der Abtastspiegel 18 der Abtasteinheit 16 angeordnet ist. Der Abtastspiegel 18 lenkt das von der Lampe 8 ausgehende und von der Oberfläche 12 der Karosserie 6 reflektierte Licht nach Durchtritt durch das Lichteintrittsfenster 19 in das Objektiv 15 der Kamera 14 um.

Der Abtastspiegel 18 der Abtasteinheit 16 wird rechnergesteuert durch ein nicht näher dargestelltes Antriebssystem angetrieben und hat eine Winkelgeschwindigkeit von ca. 0,5 Umdrehungen pro Minute. Er kompensiert die Bewegungsunschärfe, die bei der Aufnahme der Karosserie-Oberfläche 12 während der Förderbewegung durch den Schlitten 5 ohne eine derartige Kompensation entstehen würde. Darüber hinaus können Unregelmäßigkeiten in der Fördergeschwindigkeit des Schlittens 5 bei ruckartigem Antrieb durch eine entsprechende zusätzliche Regelung der Bewegung des Abtastspiegels 18 ausgeglichen werden, wenn z. B. durch einen an sich bekannten und nicht dargestellten Tachogenerator am Ritzel einer den Schlitten 5 antreibenden Kette derartige Geschwindigkeitsschwankungen registriert und entspechende Signale in die Scanner-Steuerung aller Sensoreinheiten 4 eingegeben werden.

Wenn sich in gewölbten Oberflächenbereichen der Karosserie 6 der Einfallswinkel für das von den Beleuchtungeinheiten 3 kommende Abtastlicht beim Fördern der Karosserie durch das Portal 2 ändert, wandert das auf die Bildmitte eines an die Videokamera 14 angeschlossenen Monitors eingestellte Bild des auf der Karosserie erzeugten Lichtbandes aus der Bildmitte aus. Um dies zu verhindern, hat die Abtasteinheit 16 der Sensoreinheit 4 auch noch die Aufgabe, durch entsprechende Ansteuerung des Abtastspiegels 18 ein solches Auswandern des Lichtband-Bildes aus der Bildmitte des Monitors zu verhindern.

Die Montageplatte 13 ist lösbar an eine Trägerplatte 20 angesetzt, die unter Verwendung bekannter und daher nicht dargestellter Befestigungsmittel an einem Winkelträger 21 justierbar angeordnet ist. Der Winkelträger 21 wiederum befindet sich an einer Armatur 22, mit der die Sensoreinheit 4 am Portal 2 befestigt ist.

Die Sensoreinheit 4 wird vor dem Ansetzen an die Trägerplatte 20 vorjustiert und danach durch Justierung der Trägerplatte 20 gegenüber dem Winkelträger 21 endgültig justiert. Diese Endjustage ist unabhängig vom jeweiligen Typ des zu prüfenden Fahrzeuges. Ist die Endjustage erzielt, kann die Trägerplatte 20 gegen weitere Verstellung gegenüber dem Winkelträger 21 durch Verkleben, Verschrauben oder Verstiften gesichert werden. Dies hat den Vorteil, daß eine defekte Sensoreinheit 4 von der Trägerplatte 20 abgenommen und durch eine neue, gleichartige und vorjustierte Sensoreinheit ersetzt werden kann, ohne die Justage der Gesamtanordnung zu verlieren.

Die Justage der Gesamtanordnung jeder Sensoreinheit 4 am Portal 2 erfolgt derart, daß sich die Aufnahmebereiche der Videokameras von benachbart angeordneten Sensoreinheiten auf der Oberfläche 12 der Karosserie 6 überlappen, wie dies aus Fig. 2 ersichtlich ist. Hierdurch wird erreicht, daß bei der nachfolgend näher beschriebenen Überprüfung der Karosserie-Oberfläche auf Lackfehler kein Teilbereich dieser Oberfläche ausgelassen wird und ungeprüft bleibt. Darüber hinaus ist bei der Justage darauf zu achten, daß das Bild des auf der Karosserie-Oberfläche erzeugten Lichtbandes, das auf den an die Videokameras angeschlossenen Monitoren erscheint, etwa in der Bildmitte liegt, wenn senkrecht zum Querschnittsprofil der Karosserie orientierte Oberflächenbereiche erfaßt werden. Das Weglaufen des Lichtbandes aus der Bildmitte bei gewölbten Oberflächenbereichen wird - wie bereits erwähnt - durch die Rechnersteuerung der Abtasteinheit 18 verhindert.

Wie aus Fig. 3 und 4 ersichtlich ist, sind am Portal 2 die Beleuchtungseinheiten 3 und die Sensoreinheiten 4 dicht nebeneinander angeordnet, so daß die Lichteintrittsfenster 19 der Sensoreinheiten 4 dicht neben den Lichtaustrittsfenstern 10 der Beleuchtungseinheiten 3 in einer Ebene liegen. Das von den Beleuchtungseinheiten 3 ausgehende Licht wird somit an der Karosserie-Oberfläche 12 unter einem sehr kleinen Reflexionswinkel zu den Sensoreinheiten 4 reflektiert. Dadurch bleiben Verzerrungen an den konvexen und konkaven Oberflächenbereichen der Karosserie 6 gering.

Die Videokamera jeder Sensoreinheit 4 ist an je einen separaten Kamerarechner angeschlossen. Diese Kamerarechner, welche dem handelsüblichen Rechnerangebot entstammen können, sind, wie aus Fig. 1 ersichtlich ist, in einem ersten Schaltschrank 23 untergebracht. Allerdings kann bei der in Fig. 2 gezeigten Ausführungsform mit 26 Sensoreinheiten die Anzahl der Kamerarechner von 26 auf 19 Stück reduziert werden, wenn die Rechner der Kameras der Sensoreinheiten D1 bis D7, welche zur Abtastung der Dachflächen der Karosserie 6 dienen, wechselweise auch an die Kameras der Sensoreinheiten H1 bis H7, die zur Abtastung der Haubenflächen der Karosserie 6 dienen, angeschlossen werden. Dies ist möglich, weil sich Dach- und Haubenflächen der Karosserie 6 in der Draufsicht von oben nicht überschneiden und deshalb die Sensoreinheiten D1 bis D7 und die Sensoreinheiten H1 bis H7 niemals gleichzeitig, sondern stets wechselweise in Funktion treten. Die Rechner der Kameras steuern die Abtasteinheiten 18 der Sensoreinheiten 4 und werten die von ihren Videokameras erzeugten Bildsignale aus.

Die Ausgangssignale der im Schaltschrank 23 angeordneten Kamerarechner gehen an 3 Zwischenrechner, die gemäß Fig. 1 in einem Schaltschrank 24 untergebracht sind und die Daten der Sensorgruppen L1 bis L6, R1 bis R6 und D1/H1 bis D7/H7 weiter aufarbeiten, bis sie an einen Großrechner 25 weitergegeben werden. Die im Schaltschrank 24 installierten Monitore können wechselweise auf alle Sensoreinheiten 4 geschaltet werden, um das Originalbild zu überwachen.

Im Großrechner 25 erfolgt die Zusammenfassung aller Meßdaten. Er ist mit einer Datenausgabestation ausgestattet, welche Informationen von detektierten Oberflächenfehlern ausdruckt.

Mit dieser Anordnung läuft nun ein Prüfgang folgendermaßen ab. Die auf Lackfehler zu prüfende Karosserie 6 eines Kraftwagens wird außerhalb des Portals 2 auf den entsprechend weit verfahrbaren Schlitten 5 aufgesetzt, vorzugsweise mit der Frontseite zum Portal hin. Anschließend werden die Beleuchtungseinheiten 3 und Sensoreinheiten 4 sowie der Antrieb für den Schlitten 5 eingeschaltet, worauf sich die Karosserie 6 auf dem Schlitten 5 in das Portal 2 hineinbewegt und dieses mit der Fördergeschwindigkeit des Schlittenantriebs durchläuft. Bei der beschriebenen Ausführungsform beträgt die Fördergeschwindigkeit des Schlittens 5 etwa 50 - 100 mm/sec.

Dabei wandert relativ zur Karosserie 6 das schmale Lichtband, das von den Beleuchtungeinheiten 3 erzeugt wird, über die Oberfläche 12 der Karosserie 6 hinweg und beleuchtet in einem Querschnittsprofil der Karosserie jeweils einen schmalen Streifen von 50 - 100 mm Breite. Die auf dem jeweiligen Querschnittsprofil unter dem Lichtband liegenden Abschnitte der Karosserie-Oberfläche 12 werden von je einer Videokamera 14 der Sensoreinheiten 4 erfaßt.

Die im Schaltschrank 23 angeordneten Kamerarechner veranlassen automatisch, daß die ihnen zugeordneten Videokameras jeweils gleichzeitig alle 10 mm des Karosserie-Vorschubes durch das Portal 2 hindurch ein Bild der jeweils erfaßten Karosserie-Oberflächenabschnitte aufnehmen. Bei einer Vorschubgeschwindigkeit im oben erwähnten Bereich (50 - 100 mm/sec) führt dies zu ca. 5 Bildern pro Sekunde. Hat die Karosserie 6 eine übliche Länge von 4 m, so liefert demnach jede Videokamera während des Durchlaufs einer Karosserie durch das Portal 2 schrittweise eine Gesamtzahl von 400 Aufnahmen, d. h. es werden schrittweise 400 Querschnittsprofile zwischen dem frontseitigen und dem heckseitigen Ende der Karosserie 6 abgetastet und aufgezeichnet. Da diese Aufzeichnungen in Schritten von jeweils 10 mm aufeinanderfolgen und das zur Abtastung auf der Karosserie-Oberfläche 12 erzeugte Lichtband eine Breite von 50 bis 100 mm aufweist, ist wegen der im Vergleich zur Breite des Lichtbandes wesentlich geringeren Schrittweite der Aufzeichnungsfolgen sichergestellt, daß kein Abschnitt der Karosserie-Oberfläche 12 unerfaßt bleibt. Im Gegenteil, die zeitlich aufeinanderfolgenden Bilder der Oberflächenabschnitte überlappen sich in ihrem Bildinhalt jeweils um ca. 70 %.

Um eine aufwendige Belichtungssteuerung in den Objektiven der Videokameras 14 der Sensoreinheiten 4 zu vermeiden, können die Lampen 8 aller Beleuchtungseinheiten 3 gemeinsam derart gesteuert oder geregelt werden, daß die Intensität des von ihnen ausgehenden und von der Oberfläche 12 der Karosserie 6 zurückgeworfenen Lichtes der helleren oder dunkleren Farbe der Karosserie-Lackierung angepaßt wird. Dadurch kann die Intensität des in die Videokameras einfallenden Lichtes in allen Fällen in etwa konstant gehalten werden.

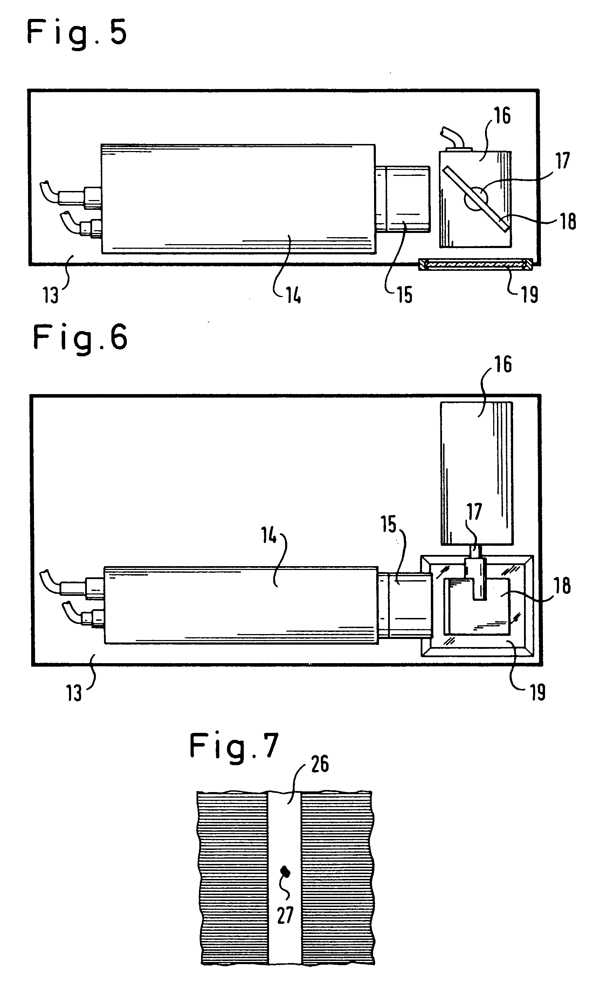

Auf den Monitoren, die auf die Videokameras 14 der Sensoreinheiten 4 aufgeschaltet werden können, erscheinen Fehler auf der Oberfläche der Karosserie 6 entweder als dunkle Stellen im hellen Bild des auf der Karosserie 6 erzeugten Lichtbandes oder als Änderungen in der Kontur des Bildes dieses Lichtbandes. Eine Aufnahme eines solchen Monitorbildes zeigt Fig. 7. Darin ist das Bild des Lichtbandes mit 26 bezeichnet, worin ein Lackfehler als dunkle Stelle 27 erscheint.

Die Daten der von den Videokameras 14 der Sensoreinheiten 4 gleichzeitig aufgezeichneten Teilbilder der einzelnen Oberflächenabschnitte des jeweils erfaßten Querschnittsprofils und die Daten der so erfaßten Bilder der nacheinander unter dem Lichtband hindurchwandernden Querschnittsprofile der Karosserie 6 werden in den Rechnern weiterverarbeitet und zu einem Gesamtbild zusammengesetzt, das von der Datenausgabestation des Rechners 25 beispielsweise als Hardcopy-Ausdruck ausgegeben wird und über etwaige Fehler auf der gesamten Oberfläche der Karosserie 6 und über die Koordinaten dieser Fehlerstellen Aufschluß gibt.

Anhand dieser Informationen können die mit der obigen Anlage detektierten Fehler auf der Oberfläche der untersuchten Karosserie durch das mit der Fehlerbeseitigung beauftragte Personal auch dann leicht aufgefunden und beseitigt werden, wenn die visuelle Erkennung dieser Fehler an sich schwierig ist.

Damit Oberflächenfehler, die auf der Oberfläche 12 der Karosserie 6 im Überlappungsbereich der Videokameras 14 zweier benachbart angeordneter Sensoreinheiten 4 liegen, durch das beschriebene System nicht doppelt gemeldet werden, kann folgendes Verfahren angewendet werden.

Vor der Inbetriebnahme der vorgeschlagenen Anordnung zur Erkennung von Oberflächenfehlern der serienmäßig zu untersuchenden Karosserien eines bestimmten Fahrzeugtyps wird zunächst ein hell-farbiges Karosserie-Muster dieses Fahrzeugtyps nacheinander vorzugsweise an vier Stellen (vorderer Bereich, Türbereich, hinterer Bereich) in das Portal 2 gestellt und jeweils mit dem von den Beleuchtungseinheiten 3 erzeugten Lichtband beleuchtet. In der ersten dieser vier Positionen werden jeweils die beiden Monitorbilder benachbarter Sensoreinheiten 4 beobachtet, so daß ungefähr in der Mitte des Überlappungsbereiches eine Markierung, z. B. mit schwarzem Filzstift, auf der Muster-Karosserie angebracht werden kann, was auf den Monitorbildern mitverfolgt und kontrolliert werden kann. In dieser Weise werden die Überlappungsbereiche aller Sensoreinheiten L1/2 bis R2/R1 des Portals auf der Muster-Karosserie markiert. Die gleichen Markierungsarbeiten werden in den folgenden zweiten bis vierten Positionen der Muster-Karosserie wiederholt. So erhält man z. B. an jeder Seitenwand der Muster-Karosserie 20 Markierungspunkte, die in 5 Zeilen angeordnet sind. Anschließend werden jeweils von Hand die vier in jeder Zeile angeordneten Markierungspunkte zu einer von vorn nach hinten durchgezogenen schwarzen Linie verbunden, wozu keine besondere Sorgfalt angewendet werden muß. Somit wird die Gesamtfläche des Muster-Karosserie an den beiden Seitenflächen und an den Dach-und Haubenflächen mit insgesamt 16 von vorn nach hinten verlaufenden Markierungslinien überzogen. Diese so markierte Muster-Karosserie wird nun aus dem Portal 2 herausgefahren und anschließend erneut in das Portal 2 eingeführt und in einem regulären Prüfgang, wie er oben beschrieben wurde, durch das Portal 2 hindurchgeführt.

Ein spezielles Inbetriebnahmeprogramm der Rechner erkennt nun in jedem Bild, das von den Sensoreinheiten 4 erzeugt wird, maximal 2 Markierungslinien und legt damit jeweils exakt den Meßbereich jeder Sensoreinheit 4 an jeder Stelle der Karosserie-Oberfläche des durch die markierte Muster-Karosserie repräsentierten Fahrzeugtyps fest.

Der Meßbereich der Videokameras 14 von jeweils zwei benachbart angeordneten Sensoreinheiten 4 wird also mit diesem Inbetriebnahmeprogramm so beschränkt, daß der Meßbereich der einen Kamera unterhalb und der Meßbereich der anderen Kamera oberhalb ein und derselben Markierungslinie bleibt.

Nach diesem Inbetriebnahmeprogramm kann die reguläre Untersuchung der serienmäßig vom Montageband kommenden Karosserien des betreffenden Fahrzeugtyps aufgenommen werden, wie dies oben beschrieben wurde. Wegen der mittels der Muster-Karosserie durchgeführten Begrenzung der an sich überlappenden Meßbereiche der Videokameras unterbleibt eine doppelte Fehlererfassung, ohne daß die mit der vorgeschlagenen Anordnung serienmäßig geprüften Karosserien erneut markiert werden müssen.

Die nach dem oben beschriebenen Verfahren markierte Muster-Karosserie dient somit zum Referieren der Anlage und wird für eventuelle spätere Nachjustierungen aufbewahrt.

Selbstverständlich ist es erforderlich, für jeden Fahrzeugtyp, der sich hinsichtlich der Gestaltung seiner Karosserie von anderen Fahrzeugtypen unterscheidet, eine eigene Muster-Karosserie zu schaffen und die Anlage mittels des jeweiligen Inbetriebnahmeprogramms softwaremäßig darauf einzustellen.

Anstatt den beweglich gelagerten Schlitten 5 mit der Karosserie 6 durch das feststehende Portal 2 hindurchzuführen, kann auch die Karosserie 6 ortsfest bleiben und das Portal 2 nach Ausstattung mit einem Schienenfahrwerk über die Karosserie 6 hinwegbewegt werden. Wesentlich ist nur, daß zwischen der Karosserie 6 und dem Portal 2 mit den Beleuchtungseinheiten 3 und den Sensoreinheiten 4 eine Relativbewegung stattfindet.

Mit der vorgeschlagenen Anlage können auch die Front- und Heckseiten der Karosserie von Fahrzeugen auf Oberflächenfehler untersucht werden, wenn hierfür zusätzliche und geeignet angeordnete Sensoreinheiten vor bzw. hinter dem Portal 2 vorgesehen werden.

Schließlich eignen sich das erfindungsgemäße Verfahren und die erfindunngsgemäße Vorrichtung bei entsprechender Anpassung auch zur Erkennung von Fehlern an Oberflächen anderer industriell hergestellter Gegenstände, beispielsweise von Gegenständen aus Flach- oder Hohlglas, Keramik, Kunststoff, etc. oder von Küchengeräten und sonstigen Gebrauchsgütern, von denen der Erwerber oder Benutzer einwandfreie Oberflächen erwartet.

## Patentansprüche

1. Verfahren zum Überprüfen einer glänzenden Oberfläche (12) eines Prüflings (6) auf Oberflächenfehler, vorzugsweise zur Überprüfung der Oberfläche einer lackierten Kraftfahrzeug-Karosserie (6) auf Lackierungsfehler, bei dem
- auf der Oberfläche (12) des Prüflings (6) mittels eines ortsfesten, diffuses Licht aussendenden Beleuchtungssystemes ein Lichtstreifen (26) erzeugt wird,
- der Prüfling (6) an einer Beobachtungsstelle vorbeibewegt wird und
- die Länge des Lichtstreifens (26) sich quer zur Bewegungsrichtung des Prüflings erstreckt
**dadurch gekennzeichnet,**
daß
a) die Breite des Lichtstreifens (26) etwa 50 bis 100 mm beträgt,
b) die Beobachtung - in Bewegungsrichtung (11) gesehen - von einer unmittelbar vor oder hinter dem Beleuchtungssystem (3) liegenden Position aus erfolgt, derart, daß Lichtstrahlen erfaßt werden, die unter einem verhältnismäßig kleinen Winkel von der Prüflingsoberfläche (12) reflektiert werden,
c) die Beobachtung mittels einer Videokamera (14) erfolgt, die einen optoelektronischen Wandler zur Umwandlung von analogen Lichtsignalen in elektrische Digitalsignale aufweist,
d) streifenförmige Abschnitte der Prüflingsoberfläche (12) jeweils im Bereich des Lichtstreifens (26) schrittweise aufgezeichnet werden, wobei die Schrittweite der aufeinanderfolgenden Aufzeichnungen kleiner ist als die Breite des Lichtstreifens (26) und die zeitlich aufeinanderfolgenden Bilder der Oberflächenabschnitte sich in ihrem Bildinhalt überlappen,
e) zur Erkennung von Oberflächenfehlern (27) die Daten der von der Videokamera (14) aufgezeichneten Bilder in einem Rechner (23) auf Intensitätsänderungen ausgewertet werden.

2. Verfahren nach Anspruch 1,
**dadurch gekennzeichnet,**
daß der Strahlengang der Videokamera (14) während der Aufnahmezeit für eine schrittweise Aufzeichnung in einer die Bewegungsunschärfe kompensierenden Weise mitgeschwenkt wird, wofür laufend die Vorbeilaufgeschwindigkeit des Prüflings (6) erfaßt wird.

3. Verfahren nach Anspruch 1 oder 2,
**dadurch gekennzeichnet,**
daß der Strahlengang der Videokamera (14) mittels einer Ansteuerung in der Weise steuerbar ist, daß eine von Aufzeichnungsschritt zu Aufzeichnungsschritt eintretende Winkeländerung in der Topographie der Prüflingsoberfläche (12) ausgeglichen und ein Auswandern des zu erfassenden, auf der Prüflingsoberfläche (12) erzeugten Lichtstreifens (26) aus dem Erfassungsbereich der Videokamera (14) verhindert wird.

4. Verfahren nach Anspruch 1, 2 oder 3,
**dadurch gekennzeichnet,**
daß eine Konturlinie des auf der Prüflingsoberfläche (12) erzeugten Lichtstreifens (26) in der schrittweisen Aufzeichnung erfaßt und im Rechner (23) auf Änderungen im Linienverlauf ausgewertet wird.

5. Verfahren nach einem der Ansprüche 1 bis 4,
**dadurch gekennzeichnet,**
daß durch eine vielfache, quer zur Vorbeilaufrichtung (11) nebeneinander entlang eines die Vorbeilaufstrecke des Prüflings (6) portalartig überspannenden Bogens (Portal 2) gleichzeitig vorgenommene Beleuchtung und Beobachtung (3, 4) der gesamte, nicht der Unterlage (5) zugekehrte Oberflächenbereich des Prüflings (6), der - quer zur Vorbeilaufrichtung (11) - sich über einen Umfangsbereich von mehr als der von einer einzelnen Beobachtungs- und Beleuchtungssystem (3) erfaßbaren Breite erstreckt, geprüft wird (Fig. 2).

6. Einrichtung zum Überprüfen einer glänzenden Oberfläche eines Prüflings auf Oberflächenfehler, vorzugsweise zur Überprüfung der Oberfläche einer lackierten Kraftfahrzeug-Karosserie (6) auf Lackierungsfehler, insbesondere zur Ausübung des Verfahrens nach Anspruch 1, mit
- einem ortsfesten, diffuses Licht aussendenden Beleuchtungssystem (3) zur Erzeugung eines Lichtstreifens (26) auf der Oberfläche (12) des Prüflings (6) und
- einer Transporteinrichtung (5) zum Vorbeibewegen des Prüflings (6) an einer Beobachtungsstelle
**dadurch gekennzeichnet,**
daß
a) das Beleuchtungssystem (3) eine Beleuchtungseinheit mit einem Lichtaustrittsfenster (10) zum Erzeugen der Lichtstreifen (26) aufweist, wobei das Lichtaustrittsfenster (10) quer zur Bewegungsrichtung (11) eine relativ große Ausdehnung hat und in Bewegungsrichtung (11) verhältnismäßig schmal ist, wodurch auf der Oberfläche des Prüflings ein Lichtstreifen (26) von etwa 50 bis 100 mm Breite erzeugt werden kann,
b) in Bewegungsrichtung (11) gesehen unmittelbar vor oder hinter dem Lichtaustrittsfenster ein Aufzeichnungssystem mit einer Videokamera (14) angeordnet ist, die optoelektronische Wandler zur Umwandlung von analogen Lichtsignalen erfaßt, die unter einem verhältnismäßig kleinen Winkel von der Prüflingsoberfläche (12) reflektiert werden,
c) eine Abtasteinheit (16) vorgesehen ist, die einen zur Bewegung des Prüflings (6) mitschwenkbaren Spiegel (18) umfaßt, der das von der Prüflingsoberfläche (12) reflektierte Licht in das Objektiv (15) der Videokamera (14) umlenkt,
d) eine Steuereinrichtung für die Videokamera (14) und die Abtasteinrichtung (16) vorgesehen ist, die diese in der Weise ansteuert, daß streifenförmige Abschnitte der Prüflingsoberfläche (12) jeweils im Bereich des Lichtstreifens (26) schrittweise aufgezeichnet werden, wobei die Schrittweite der aufeinanderfolgenden Aufzeichnungen kleiner ist als die Breite des Lichtstreifens (26) und die zeitliche aufeinanderfolgenden Bilder sich in ihrem Bildinhalt überlappen,
e) ein Rechner (23) vorgesehen ist, der zur Erkennung von Oberflächenfehlern die Daten der von der Videokamera aufgezeichneten Bilder auf Intensitätsänderungen auswertet.

7. Einrichtung nach Anspruch 6,
**dadurch gekennzeichnet,**
daß die Beleuchtungseinheit des Beleuchtungssystems (3) eine Lampe (8) und einen Reflektor (9) umfaßt, der in der Umlenkrichtung des Reflektors (9) als Spiegel und in der quer zur Umlenkebene stehende Richtung als Diffusor wirkt.

8. Einrichtung nach Anspruch 6 oder 7,
**dadurch gekennzeichnet,**
daß das Beleuchtungssystem mehrere, quer zur Vorbeilaufrichtung (11) unmittelbar aneinander anschließende Beleuchtungseinheiten (3) umfaßt, die gemeinsam ein durchgehendes Lichtband erzeugen.

9. Einrichtung nach Anspruch 8,
**dadurch gekennzeichnet,**
daß die mehreren, nebeneinander angeordneten Beleuchtungseinheiten (3) ein Portal (2) bilden, das den Prüfling (6) überspannt.

10. Einrichtung nach Anspruch 8 oder 9,
**dadurch gekennzeichnet,**
daß die mehreren Beleuchtungseinheiten (3) in ihrer Lichtintensität gemeinsam steuerbar sind.

11. Einrichtung nach einem der Ansprüche 6 bis 10,
**dadurch gekennzeichnet,**
daß das Aufzeichnungssystem eine Antriebseinheit (16) für einen zwischen der Videokamera (14) und dem Prüfling (6) angeordneten beweglichen Spiegel (18) umfaßt.

12. Einrichtung nach einem der Ansprüche 8 bis 11,
**dadurch gekennzeichnet,**
daß mehrere Aufzeichnungssysteme vorgesehen sind, deren quer zur Vorbeilaufrichtung (11) gemessene, auf die Prüflingsoberfläche bezogenen Aufzeichnungsbereiche in Umfangsrichtung aneinander anschließen.

13. Einrichtung nach Anspruch 12,
**dadurch gekennzeichnet,**
daß die den Aufzeichnungssystemen zugeordneten Rechner (23) an einen weiteren Rechner (25) angeschlossen sind, der ein Gesamtbild der mit den einzelnen Aufzeichnungssystemen aufgezeichneten Einzelbilder erstellt.

## Claims

1. Process for the examination of a glossy surface (12) of a test specimen (6) for surface faults, preferably for the examination of the painted surface of bodywork of a motor vehicle (6) for paint faults, in which
- a strip of light (26) is produced on the surface (12) of the test specimen (6) by means of diffuse light emitted from a fixed lighting system,
- the test specimen (6) is moved past an observation point, and
- the length of the strip of light (26) extends across the test specimen transverse to the direction of movement,
characterised in that,
a) the width of the strip of light (26) amounts to about 50 to 100 mm,
b) the observation - seen in the direction of movement (11) - occurs from a position laying immediately behind or in front of the lighting system (3) in such a way that light rays which are reflected at a relatively small angle from the surface of the test specimen (12) are recorded,
c) the observation occurs by means of a video camera (14) which has an optical-electronic converter for the conversion of analogue light signals into digital electrical signals,
d) strip-shaped sections of the surface of the test specimen (12) are recorded stepwise each time in the region of the strip of light (26), whereby the step-width of the sequential recordings is smaller than the width of the strip of light (26) and the images of the surface sections, following one another in time, overlap one another in their image content,
e) to identify surface faults (27), the data from the images recorded by the video camera (14) is evaluated for intensity changes in a computer (23).

2. Process in accordance with Claim 1, characterised in that, the path of the rays to the video camera (14) is swung around in a way which compensates for movement blur during the recording time for one stepwise recording, for which purpose the transitional speed of the test specimen (6) is continuously recorded.

3. Process in accordance with Claim 1 or 2, characterised in that, the path of the rays to the video camera (14) can be controlled by a drive in such a way that compensation is made for the change of angle in the topography of the surface of the test specimen (12) which occurs from one recording step to the next recording step, and the strip of light which is (26) produced on the surface of the test specimen (12) and which is to be recorded is prevented from moving away from the recording region of the video camera (14).

4. Process in accordance with Claim 1, 2 or 3, characterised in that, a contour line of the strip of light (26) produced on the surface of the test specimen (12) is recorded in the stepwise recording and is evaluated for changes in the course of the line.

5. Process in accordance with one of the Claims 1 to 4, characterised in that, the entire surface region of the test specimen (6) not facing the support (5) is examined by a multiplicity of simultaneously executed illuminations and observations (3, 4) which are adjacent to one another and transverse to the direction of transition (11) along an arch (portal 2) extending over the transitional route of the test specimen (6) which extends - transverse to the direction of transition (11) - over a peripheral region of more than the recordable width of one single observation system and lighting system (Figure 2).

6. Device for examining a glossy surface of a test specimen for surface faults, preferably for the examination of the surface of the painted bodywork of a motor vehicle (6) for paint faults, especially for carrying out the process in accordance with Claim 1, with
- a fixed lighting system (3) emitting diffuse light for producing a strip of light (26) on the surface (12) of the test specimen (6) and
- a transportation device (5) for moving the test specimen (6) past an observation point (6),
characterised in that,
a) the lighting system (3) has a lighting unit with a light exit window (10) to produce the strip of light (26), whereby the light exit window (10) has a relatively large elongation transverse to the direction of movement (11) and is relatively narrow in the direction of movement (11), and by this means a strip of light (26) about 50 to 100 mm wide can be produced on the surface of the test specimen,
b) as seen in the direction of movement (11) and immediately behind or in front of the light exit window, a recording system with a video camera (14) is arranged which includes the optical-electronic converter for converting the analogue light signals which are reflected at a relatively small angle from the surface of the test specimen (12),
c) a scanning unit (16) is provided comprising a mirror (18) which can be moved with the movement of the test specimen (12), whereby the mirror deflects the light reflected from the surface of the test specimen (12) into the lens (15) of the video camera (14),
d) a control device, provided for the video camera (14) and the scanning device (16), controls these in such a way that the strip-shaped sections of the surface of the test specimen (12) are recorded stepwise each time in the region of the strip of light (26), whereby the step-width of the sequential recordings is smaller than the width of the strip of light (26) and the images, following one another in time, overlap one another in their image content,
e) a computer (23) is provided which evaluates the data from the images recorded by the video camera for changes in intensity, so that surface faults may be recognised.

7. Device in accordance with Claim 6, characterised in that, the lighting unit of the lighting system (3) comprises a lamp (8) and a reflector (9), which functions as a mirror in the rotational direction of the reflector (9) and functions as a diffuser in the direction transverse to the plane of rotation.

8. Device in accordance with Claim 6 or 7, characterised in that, the lighting system comprises several lighting units (3) which are placed transversely to the transitional direction (11) immediately following one another, and which together produce a continuous band of light.

9. Device in accordance with Claim 8, characterised in that, the several lighting units (3) arranged adjacent to one another form a portal (2) which stretches over the test specimen (6).

10. Device in accordance with Claim 8 or 9, characterised in that, the light intensity of the several lighting units (3) can be controlled together.

11. Device in accordance with one of the Claims 6 to 10, characterised in that, the recording system comprises a drive unit (16) for a moveable mirror (18) arranged between the video camera (14) and the test specimen (6).

12. Device in accordance with one of the Claims 8 to 11, characterised in that, several recording systems are provided whose recording regions on the surface of the test specimen, measured transversely to the transitional direction (11), adjoin one another in the peripheral direction.

13. Device in accordance with Claim 12, characterised in that, the computers (23) assigned to the recording systems (4) are connected to a further computer (25) which generates an overall image from the individual images recorded by the individual recording systems.

## Revendications

1. Procédé de contrôle de défauts de surface d'une surface (12) brillante d'un éprouvette (6), de préférence en vue du contrôle des défauts de peinture de la surface d'une carrosserie (6) peinte d'un véhicule, dans le lequel
- une bande de lumière (26) est produite sur la surface (12) de l'éprouvette (6), au moyen d'un système d'éclairage fixe, émettant une lumière diffuse,
- l'éprouvette (6) est déplacée devant un point d'observation et
- la longueur de la bande lumineuse (26) s'étend transversalement à la direction de déplacement de l'éprouvette,
caractérisé en ce que
a) la largeur de la bande lumineuse (26) est comprise entre 50 et 100 mm environ,
b) l'observation - dans le sens du déplacement (11)-s'effectue à partir d'une position située directement devant ou derrière le système d'éclairage (3), de manière que soient détectés des faisceaux lumineux qui sont réfléchis sous un angle relativement petit par la surface (12) de l'éprouvette,
c) l'observation s'effectue au moyen d'une caméra vidéo (14) qui comporte un convertisseur opto-électronique pour la conversion de signaux lumineux analogiques en signaux numériques électriques,
d) des portions en forme de bandes de la surface de l'éprouvette sont enregistrées pas à pas dans la zone de la bande lumineuse (26), la largeur des pas des enregistrements successifs étant inférieure à la largeur de la bande lumineuse (26) et les images des portions de surface, se succédant dans le temps, se recouvrant dans leur contenu,
e) pour la détection des défauts de surface (27), les données des images enregistrées par la caméra vidéo (14) sont exploitées dans un ordinateur (23) quant aux variations d'intensité.

2. Procédé selon la revendication 1, caractérisé en ce que le parcours du faisceau de la caméra vidéo (14) pendant le temps de prise est pivoté aussi pour un enregistrement pas à pas d'une manière qui compense la défocalisation due au déplacement, la vitesse de passage de l'éprouvette (6) état détectée en permanence.

3. Procédé selon les revendications 1 ou 2, caractérisé en ce que le parcours du faisceau de la caméra vidéo (14) peut être commandé au moyen d'une commande, de maniere à compenser une variation angulaire dans la topographie de la surface de l'éprouvette, survenant d'un pas d'enregistrement à l'autre et de manière à empêcher que la bande lumineuse (26), produite sur la surface (12) de l'éprouvette, à détecter, ne sorte du champs de la camera vidéo (14).

4. Procédé selon les revendications 1, 2 ou 3, caractérisé en ce qu'une ligne de contour de la bande lumineuse (26), produite sur la surface (12) de l'éprouvette, est detectée dans l'enregistrement pas à pas et exploitée ans l'ordinateur (23) quant aux variations du parcours de cette ligne.

5. Procédé selon l'une des revendications 1 à 4, caractérisé en ce que toute la zone de surface de l'éprouvette (6), non tournée vers le support (5), qui s'étend - transversalement à la direction de passage (11)- sur une zone périphérique supérieure à la largeur pouvant être détectée par un système individuel d'observation et d'éclairage (3), est contrôlée par un éclairage et une observation (3, 4) effectués simultanément, à plusieurs reprises, transversalement à la direction de passage (1) côte à côte, le long d'un arc (portique 2) franchissant en portique le parcours de passage de l'éprouvette (6) (figure 2).

6. Dispositif de contrôle de défauts de surface d'une surface (12) brillante d'un éprouvette (6), de préférence en vue du contrôle des défauts de peinture de la surface d'une carrosserie (6) peinte d'un véhicule, en particulier pour la mise en oeuvre du procédé selon la revendication 1, comportant
- un système d'éclairage (3) fixe, émettant une lumière diffuse, destiné à produire une bande lumineuse (26) sur la surface (12) de l'éprouvette (6) et
- un dispositif de transport (5) pour le déplacement de l'éprouvette (6) devant un point d'observation
caractérisé en ce que
a) le système d'éclairage (3) comporte une unité d'éclairage avec une fenêtre de sortie de lumière (10) pour produire la bande lumineuse (26), la fenêtre de sortie de lumière (10) présentant transversalement à la direction de déplacement (11), une extension relativement grande et étant relativement étroite dans la direction de déplacement (11), une bande lumineuse (26) d'environ 50 à 100 mm de largeur pouvant être produite sur la surface de l'éprouvette,
b) directement devant ou derrière la fenêtre de sortie de lumière, dans le sens de déplacement (11), il est prévu un système d'enregistrement avec une caméra vidéo (14), qui comporte des convertisseurs opto-électroniques pour la conversion de signaux lumineux analogiques, qui sont réfléchis par la surface (12) de l'éprouvette, sous un angle relativement petit,
c) il est prévu une unité de détection (16) qui comporte un miroir (18) pivotant en même temps en vue du déplacement de l'éprouvette (6), lequel miroir dévie la lumière réfléchie par la surface (12) de l'éprouvette dans l'objectif (15) de la caméra vidéo (14),
d) il est prévu un dispositif de commande pour la caméra vidéo (14) et le dispositif de détection (16), qui commande ce dernier de manière que des portions en forme de bandes de la surface (12) de l'éprouvette soient enregistrées pas à pas dans la zone de la bande lumineuse (26), la largeur des pas des enregistrements successifs étant inférieure à la largeur de la bande lumineuse (26) et les images se succédant dans le temps se recouvrant dans leur contenu,
e) il est prévu un ordinateur (23) qui exploite les données des images enregistrées par la caméra vidéo quant aux variations d'intensité, en vue de détecter les défauts de surface.

7. Dispositif selon la revendication 6, caractérisé en ce que l'unité d'éclairage du système d'éclairage (3) comporte une lampe (8) et un réflecteur (9) qui sert de miroir dans le sens de déviation du réflecteur (9) et de diffuseur dans la direction transversale au plan de déviation.

8. Dispositif selon la revendication 6 ou 7, caractérisé en ce que le système d'éclairage comporte plusieurs unités (3) se raccordant directement les unes aux autres, transversalement à la direction de passage (11), lesquelles produisent conjointement une bande lumineuse continue.

9. Dispositif selon la revendication 8, caractérisé en ce que les unités d'éclairage (3), disposées côte à côte, forment un portique (2) qui enjambe l'éprouvette (6).

10. Dispositif selon les revendications 8 ou 9, caractérisé en ce que les unités d'éclairage (3) peuvent être commandées conjointement en ce qui concerne leur intensité lumineuse.

11. Dispositif selon l'une des revendications 6 à 10, caractérisé en ce que le système d'enregistrement comporte une unité d'entrainement (16) pour un miroir (18) monté mobile entre la caméra vidéo (14) et l'éprouvette (6).

12. Dispositif selon l'une des revendications 8 à 11, caractérisé en ce qu'il est prévu plusieurs systèmes d'enregistrement dont les champs d'enregistrement mesurés transversalement à la direction de passage (11), rapportés à la surface de l'éprouvette, se rattachent les uns aux autres dans la direction périphérique.

13. Dispositif selon la revendication 12, caractérisé en ce que les ordinateurs (23) associés aux systèmes d'enregistrement sont connectés à un autre ordinateur (25) qui établit une image d'ensemble des images individuelles enregistrées avec les différents systèmes d'enregistrement.
